# EUROPEAN PATENT SPECIFICATION

(11) **EP 4 462 515 B1**
(45) Date of publication and mention of the grant of the patent: **23.07.2025**
(21) Application number: 23761743.6
(22) Date of filing: 31.03.2023
(51) Int. Cl.: H01M 4/62, H01M 4/1397, H01M 4/36, H01M 4/505, H01M 4/525, H01M 4/58, H01M 10/52, H01M 4/04, H01M 4/136, H01M 10/052, H01M 4/02

(54) **BATTERY POSITIVE ELECTRODE MATERIAL AND TREATMENT METHOD THEREFOR, AND BATTERY**
POSITIVES BATTERIEELEKTRODENMATERIAL UND BEHANDLUNGSVERFAHREN DAFÜR SOWIE BATTERIE
MATÉRIAU D'ÉLECTRODE POSITIVE DE BATTERIE ET SON PROCÉDÉ DE TRAITEMENT, ET BATTERIE

(43) Date of publication of application: 13.11.2024
(73) Proprietor: Kunming University of Science and Technology, Kunming, Yunnan 650093 (CN)
(72) Inventor: LIANG, Feng, Kunming Yunnan 650093 (CN); DONG, Peng, Kunming Yunnan 650093 (CN); ZHANG, Da, Kunming Yunnan 650093 (CN)
(74) Representative: Zaboliene, Reda
(86) International application number: PCT/CN2023/085616
(87) International publication number: WO 2024/197861

(56) References cited:
- CN-A- 111 082 162
- CN-A- 114 583 124
- CN-A- 114 583 124
- CN-A- 114 597 394
- CN-A- 114 597 394
- CN-A- 114 604 905
- CN-A- 114 604 905
- CN-A- 115 275 138
- CN-B- 111 082 162
- US-A1- 2009 305 132

## Description

### CROSS-REFERENCE TO RELATED APPLICATIONS

The application claims priority of Chinese patent application PCT/CN2023/085616 filed on March 31, 2023.

### TECHNICAL FIELD

The present disclosure relates to the field of battery material, and more specifically to a battery positive electrode material and a method for treating the battery positive electrode material and a battery.

### BACKGROUND

In recent years, industries including mobile consumer electronics and electric vehicles have been developed rapidly, and there is an urgent desire to develop new energy batteries with high energy density and high safety and stability, so as to improve the long-term endurance and stable operation of these devices. As a result, lithium-ion or sodium-ion batteries are widely considered to be one of the most promising candidates for large-scale energy storage applications. However, due to the bottleneck of slow diffusion rate of lithium/sodium ion existing in the known positive electrode materials, the energy and power density of lithium ion or sodium ion battery is low, and high performance positive electrode materials can improve the energy density, cycle life and double rate of lithium ion or sodium ion battery, so it is particularly important to develop positive electrode materials with high performance US 2009/305132 A1 and CN 114604905 A disclose positive electrode materials.

### SUMMARY

In view of the deficiencies existing in the prior art, one of the purposes of the present disclosure is to solve one or more problems existing in the prior art. For example, one of the purposes of the present disclosure is to provide a processing method that can enhance the surface energy of the positive particle of a battery and improve its interface affinity with the electrolyte.

To achieve the above purpose, the present invention was made, which is defined by the appended claims.

In an exemplary embodiment of the method of the present invention for processing the positive electrode material, the cold plasma treating time can be 1 min to 60 min.

In an exemplary embodiment of the method of the present disclosure for treating the positive electrode material of a battery, the discharge to generate cold plasma may be selected from one or a combination of radio-frequency plasma discharge, corona discharge, dielectric barrier discharge, and sliding arc discharge.

In an exemplary embodiment of the method of the present disclosure for treating the positive electrode material of a battery, the cold plasma treatment may include inputting a precursor gas including one or a combination of oxygen and nitrogen into a cold plasma generator to generate active particles to be doped in the carbon layer, where a flow rate of the precursor gas may be 1 ml/s~15 ml/s.

In an exemplary embodiment of the method of the present disclosure for the treatment of positive battery material, the positive battery material may be a polyanionic compound, a layered oxide, a spinel compound, a Prussian blue, or a ternary lithium battery positive material. For example, the positive electrode material of the battery may be sodium vanadium phosphate, lithium iron phosphate, sodium titanium phosphate, sodium fluoride phosphate, LiMO₂, NaMO₂, LiN₂O₄, lithium nickel-cobalt manganate or lithium nickel-cobalt aluminate, where M may be Co, Ni, Mn, V or Fe, and N may be Co, Nix, Mn or V.

In an exemplary embodiment of the method for treating the positive battery material of the present disclosure, at least part of the surface of the doped positive electrode material has a rod-like form.

In an exemplary embodiment of the method of the present disclosure for treating the positive electrode material of a battery, an average length of the rod form may be 1.5 µm~3 µm.

In an exemplary embodiment of the method of the present disclosure for treating the positive battery material, at least part of the surface of the doped positive electrode material forms a NaF layer, which may have an average thickness of 6 nm~10 nm.

In an exemplary embodiment of the method of the present disclosure for treating the positive electrode material of a battery, the content of the NaF layer is not less than 500 ppm.

The other aspect of the present invention
provides positive electrode material of a battery, at least part of the surface contains a carbon layer and at least part of the surface has a rod-like shape, wherein the carbon layer is a carbon layer doped with active particles after being treated by cold plasma; The doping amount is not less than 50 ppm.

In a battery positive material of the present invention the active particle may be one or a combination of oxygen or nitrogen.

In an exemplary embodiment of a battery positive electrode material of the present disclosure, an average length of the rod form is 1.5 µm~3 µm.

The other aspect of the present disclosure provides a positive electrode sheet which contain the positive electrode material treated by the above method or the above mentioned positive battery material.

The second aspect of the present disclosure provides a battery which contain the positive electrode sheet mentioned above.

Compared with the prior art, the beneficial effects of the present disclosure include at least one of the following:

(1) The method of the present disclosure can enhance the particle surface energy of the positive battery material, improve its interface affinity with the electrolyte, and obtain the positive electrode material with uniform texture, low porosity, high ionic conductivity and electronic conductivity.

(2) The positive electrode material of the present disclosure has high electronic conductivity, good compatibility with the electrolyte interface, and the surface has a "rod-like" shape, so that the positive electrode material of the battery has good stability in contact with the fluid collecting interface, and can improve the transmission rate of sodium ions and electronic conductivity.

(3) The method of the present disclosure can generate a NaF layer on the surface of the positive electrode material of the battery. The NaF layer has ultra-high conductivity of sodium ions, which limits the occurrence of side reactions between the positive electrode material and the electrolyte, and improves the transmission rate of sodium ions at the solid-liquid interface.

(4) Lithium ion battery and sodium ion battery prepared using the battery positive electrode material treated by the method of the present disclosure have high energy density, cycle life and double rate.

(5) The method of the present disclosure has the advantages of simple technological flow, low energy consumption, less equipment investment, no "three wastes" generation, environmental friendliness, and is suitable for large-scale production applications.

### BRIEF DESCRIPTION OF DRAWINGS

Other purposes and features described above of the present disclosure will become clearer by the following description in conjunction with the attached drawings, where:
FIG. 1 shows an XRD (X-Ray Diffraction) comparison of vanadium phosphate sodium positive electrode material after treatment and before treatment in example 1.
FIG. 2 shows a comparison of XPS (X-Ray Photoelectron Spectroscopy) of vanadium phosphate sodium positive electrode material after and before treatment in Example 1.
FIG. 3 shows a SEM (Scanning Electron Microscope) image of the untreated vanadium phosphate sodium positive electrode material in Example 2.
FIG. 4 shows a SEM image of vanadium phosphate sodium positive electrode material treated in Example 2.
FIG. 5 shows a voltage-capacity diagram of the battery in example 2.
FIG. 6 shows a contact Angle of the untreated vanadium phosphate sodium positive electrode material to the electrolyte in example 3.
FIG. 7 shows a contact Angle of the treated vanadium phosphate sodium positive electrode material to the electrolyte in Example 3.
FIG. 8 shows an EIS (Electrochemical Impedance Spectroscopy) of the treated vanadium phosphate sodium positive electrode material in Example 3.
FIG. 9 shows an XPS of the untreated vanadium phosphate sodium positive electrode material in example 4.
FIG. 10 shows an XPS of the treated vanadium phosphate sodium positive electrode material in example 4.
FIG. 11 shows a voltage-capacity diagram of the battery in example 6.
FIG. 12 shows a long cycle of vanadium phosphate sodium treated in example 6.
FIG. 13 shows a voltage-capacity diagram of the battery in example 8.
FIG. 14 shows a long cycle diagram of treated lithium iron phosphate in Example 8.
FIG. 15 shows an EIS of lithium iron phosphate before and after treatment in example 9.

### DETAILED DESCRIPTION

A battery positive electrode material according to the present invention a processing method and a battery are described in detail in conjunction with attached drawings and exemplary embodiments below.

One aspect of the present disclosure provides a method for treating positive electrode material of a battery, which may include the following steps: performing cold plasma treatment on positive material with at least part of a carbon layer on the surface of a battery to be treated for doping the carbon layer, where the doping amount is not less than 50 ppm.

By doping the carbon layer attached or coated on the surface of the positive electrode material with highly active particles generated by cold plasma, more defects can be formed on the surface of the carbon layer, which improves the stability of the contact between the positive electrode material and the fluid collecting interface, and thus improving a transmission rate of sodium ions or lithium ions and electronic conductivity. In addition, it will also improve affinity between the positive electrode material and electrolyte, alleviate serious volume effect due to larger radius of sodium ion or lithium ion, so that the active substance has good structural stability in the long cycle process. Compared with untreated positive electrode material, the battery using treated positive electrode material has lower polarization voltage, lower interface impedance, more stable charging and discharging platform, and higher specific capacity.

In the embodiments, the battery positive electrode material to be treated shows that at least part of it has a carbon layer for carbon doping. The carbon layer can be fully or partially coated on the surface of the positive electrode material to be treated. That is, the carbon layer described in the present disclosure can form all or only part of the surface of the positive electrode material, and in some embodiments, the carbon layer can be one or more layers, for example, the carbon layer can be 2, or 3, or 4, or more than 5, or more than 6 layers. It should be understood that the surface of the positive electrode material can contain not only the carbon layer, but also other coating or adhesion layers on the surface of the positive electrode material that can improve performance of the positive electrode material.

In some embodiments, the doping amount will affect the electronic conductivity of the carbon layer on the surface of the positive electrode material. If the doping amount is less than 50 ppm, the improvement of the electronic conductivity of the carbon layer on the surface of the positive electrode material is not obvious. The doping amount is no less than 50 ppm, no less than 70 ppm, no less than 85 ppm, no less than 105 ppm, no less than 123 ppm, no less than 152 ppm, or 160 ppm~246 ppm, or 214 ppm~318 ppm, or 259 ppm~413 ppm, or 586 ppm to 793 ppm, or 803 ppm to 1050 ppm. In addition, doping amount greater than 600 ppm may cause destruction of the carbon layer on the surface and reduce cyclic stability of active particles. Therefore, preferably, doping amount should be between 50 ppm and 600 ppm.

In some embodiments, a thickness of the positive electrode material to be treated can be adjusted. As described in the present disclosure, positive electrode material with any thickness can be treated with the treatment method described in the present disclosure. In some embodiments, the thickness of the positive electrode material to be treated may be 30 µm to 100 µm, for example, the thickness may be less than 28 µm or greater than 110 µm, or 15 µm, or 45 µm, or 84 µm, or 141 µm.

In the embodiments, the power of cold plasma treatment range from 100 W to 500 W. In the range of 100 W~500 W, doping can be realized while ensuring stability of the carbon layer on the surface of the positive electrode material. If the power is lower than 100 W, it will not reach the energy to break the carbon-carbon bond, so that the active particles will not be doped in. If the energy is higher than 500 W, the carbon layer structure on the surface of the positive electrode material will be destroyed, resulting in deterioration of its electrochemical performance. In this power range, the positive electrode material can obtain high surface energy and it can improve affinity between the positive electrode and the electrolyte interface. For example, the cold plasma can be generated by transporting an air source (precursor gas) such as oxygen, nitrogen, or a mixture of gases to a cold plasma generator to produce active particles. For the power applied above, it should be noted that the power is directly acted on the precursor gas, that is, the power directly received by the air source. In some embodiments, the power of cold plasma treatment may be no less than 150 W, or no less than 245 W, or no less than 289W, or no less than 423 W.

In the embodiments, a cold plasma treatment voltage is ranged from 50 V to 150 V, and a treatment current is ranged from 0.4 A to 2 A. Applying a voltage and a current in the above ranges can make the power of cold plasma treatment reach 100 W~500 W, which can break the carbon-carbon bond while ensuring the stability of the carbon layer on the surface of the positive electrode material. It should be understood for a person skilled in the art that the voltage and the current here are those applied to a cold plasma generator. In some embodiments, the cold plasma treatment voltage may be no less than 60 V, or 72 V, or 83 V, or 114 V, or 127 V, or 142 V or a combination of the above ranges. The current of cold plasma treatment can be 0.5 A~1.8 A, 0.7 A~1.6 A, 0.9 A~1.4 A, 1.1 A~1.3 A or a combination of above range. Under the voltage, current and power applied above, the surface of the positive electrode material can be made to have a rod-like shape (rod-like structure), so that the positive electrode material has properties described in the present disclosure.

In some embodiments, a cold plasma treatment time can be 1 min~60 min. During the above cold plasma treatment time, the co-applied treatment voltage and treatment current can ensure that the carbon layer on the surface of the positive electrode material is doped up to 50 ppm or more. For example, the treatment time can be no less than 2 min, no less than 15 min, no less than 23 min, no less than 38 min, no less than 47 min, and no less than 52 min. In some cases, the treatment time of cold plasma can be greater than 30 s, or greater than 45 s. It should be understood, however, that the treatment time can be adjusted at will to achieve doping quantities described in the present disclosure.

In some embodiments, the content of NaF produced will affect electrochemical performance of the electrode surface. If the content of NaF is less than 50ppm, improvement of ionic conductivity on the surface of the positive electrode material is not obvious. Therefore, the content of NaF shall not be less than 50 ppm, 70 ppm, 85 ppm, 105 ppm, 123 ppm, 152 ppm, or 160 ppm~246 ppm, or 214 ppm~318 ppm, or 259 ppm~413 ppm, or 586 ppm to 793 ppm, or 803 ppm to 1050 ppm. In addition, doping amounts greater than 500 ppm may cause damage to binders on the surface of the electrode surface and reduce a bonding force between active substances, so preferably, doping amounts between 50 ppm and 500 ppm.

In some embodiments, the discharge to generate cold plasma is one or a combination of radio-frequency plasma discharge (RF), corona discharge (CD), dielectric barrier discharge (DBD), and sliding arc discharge (GAD). The above cold plasma equipment can discharge stably under high pressure, which is simple to operate and can form a large area of plasma discharge area, so that the active particles in the discharge area have a large range of action, which provides a basis for efficient doping treatment. Of course, it should be understood that any other discharge suitable to generate cold plasma can be applied to the treatment described in the present disclosure.

In the embodiments, the doped active particles or the doped active substances are one or a combination of oxygen doped or nitrogen doped. For example, in some embodiments, it may be independent oxygen doped, nitrogen doped, or oxygen nitrogen doped. By doping the carbon layer with highly active particles produced by cold plasma, the positive electrode material can obtain better electrochemical performance. Of course, it should be understood for a person skilled in the art that the doping of the active particles mentioned above can include doping the carbon layer on the surface of the positive electrode material after input of one or a combination of the precursor gases of oxygen and nitrogen into the cold plasma generator to generate active particles. However, in specific embodiments, doping of active particles can also be achieved by other forms of cold plasma generators.

In the embodiments, the flow rate of precursor gas into the cold plasma generator is 1 ml/s~15 ml/s. At the above precursor gas flow rate, the synergistically applied voltage and current can ensure realization of carbon layer doping. In one set of embodiments, the positive electrode material to be treated can be placed into the cold plasma generator, and the precursor gas can be passed through at the rate described in the present disclosure, and the cold plasma generator can be adjusted to the voltage and current described in the present disclosure to treat the positive electrode material. Of course, it should be understood that when oxygen doping is realized, oxygen doping needs to be completed in a short time under oxygen atmosphere to ensure that oxidation is rarely generated when oxygen-containd functional groups are introduced, so as to avoid oxidation caused by too long time or too high power. For the mixture of gases containing oxygen, oxidation can be ignored due to low oxygen content.

In some embodiments, the treated positive electrode material described in the present disclosure have different morphological characteristics compared with existing positive electrode material. At least a part of the surface of the positive electrode material has a rod-like shape. For example, for the positive electrode material vanadium phosphate sodium, a large number of rod-shaped structures, rod-like structures or sheet-shaped structures will appear on its surface after being treated by the treatment method described in the present disclosure. In some embodiments, the surface of the positive electrode material may be all in a rod-like shape, or at least 0.01 % surface area may be rod-like, or at least 0.1 % surface area may be rod-like, or at least 5 % surface area may be rod-like, or at least 9.8 % surface area may be rod-like, or at least 15.3 % surface area may be rod-like, or at least 21.5 % surface area may be in a rod-like shape, or at least 35.4 % of the surface area may be in a rod-like shape, or at least 41.2 % of the surface area may be in a rod-like shape, or at least 49.8 % of the surface area may be in a rod-like shape, or at least 55.1 % of the surface area may be in a rod-like shape, or at least 61.5 % of the surface area may be in a rod-like shape, or at least 73.5 % of the surface area may be in a rod-like shape or at least 84.5 % of its surface area is rod-like. The stability of contact between the positive electrode material and the fluid collector interface can be improved by the rod-like shape on the surface of the positive electrode material, and a transmission rate of sodium ions and electronic conductivity can be improved. However, it should be understood that the rod-like described in the present disclosure refers to a slender form or presents a slender structure, which can also be described as columnar, etc.

In some embodiments, the rod shape may have a specific length, that is, an average length of the rod shape may be no less than 1.6 µm, no less than 2.1 µm, no less than 2.4 µm, no less than 2.6 µm, no less than 2.8 µm, and no less than 2.9 µm. In some embodiments, the rod shape may have a specific diameter (i.e. the radial diameter of the rod), That is, an average diameter of rod shape can be no less than 154 nm, no less than 167 nm, no less than 179 nm, no less than 189 nm, no less than 208 nm, no less than 238 nm, no less than 268 nm, no less than 294 nm, no less than 283 nm.

In some embodiments, the mass ratio of the rod-like material to the positive electrode material can be specified. For example, the mass ratio of rod-shaped material can be 2 % to 10 % of the positive electrode material. In some embodiments, the mass ratio of rod-shaped material to the positive electrode material can be no less than 0.5 %, or 0.8 %, or 1.5 %, or 2.7 %, or 3.4 %, or 4.7 %, or 5.9 %, or 6.7 %, or 9.4 %. In some embodiments, the mass ratio is either no less than 15.8 %, or no less than 20.1 %, or no less than 30.5 %, or no less than 36.8 %.

In some embodiments, the battery positive electrode material may be a polyanionic compound, a layered oxide, a spinel compound, Prussian blue, or a ternary lithium battery positive electrode material. Polyanionic compounds may include vanadium phosphate sodium, lithium iron phosphate, sodium titanium phosphate, and sodium fluoride phosphate. The layered oxides may include LiMO₂ and NaMO₂, where M may be Co, Ni, Mn, V or Fe. Spinel type compounds may include LiN₂O₄, where N may be Co, Nix, Mn, or V. The positive electrode material of ternary lithium battery can be lithium nickel-cobalt-manganate and lithium nickel-cobalt-aluminate. It should be understood that the treatment described in the present disclosure can also work with other positive electrode material.

In some embodiments, it should be understood that other substances that enhance the electrochemical properties of the positive electrode materials described here may also be introduced.

Another aspect of the present disclosure provides a positive electrode material. In an exemplary embodiment of the positive electrode material of the present present disclosure, the positive electrode material can be obtained after treatment by the method described herein for treating the positive electrode material of a battery. In some embodiments, at least part of the surface of the positive electrode material contains a carbon layer and at least part of the surface has a rod-like shape, where the carbon layer is a carbon layer doped with active particles after cold plasma treatment.

In the embodiments, as described in the present disclosure, doping amounts can be no less than 50 ppm.

In some embodiments, as described in the present disclosure, the active particle is one or a combination of oxygen and nitrogen.

In some embodiments, as described in the present disclosure, an average length of the rod morphology can range from 1.5 µm to 3 µm and an average diameter can range from 150 nm to 300 nm.

In some embodiments, as described in the present disclosure, a mass ratio of rod-shaped material can be specified. For example, the mass ratio of rod-shaped material can be 2 % to 10 % of the positive electrode material.

The second aspect of the present disclosure provides a positive electrode sheet including a collector fluid and a positive electrode material layer arranged on the collector fluid. The positive electrode material includes positive material treated by the method for treating positive electrode material of a battery described above or includes a positive electrode material described above. In addition to the positive electrode material, the positive electrode material layer may also include a conductive agent and a binder. A positive material layer may be introduced into a positive electrode sheet by a method known in the art.

A second aspect of the present disclosure provides a battery, in particular a sodium ion battery, including a positive electrode sheet described above. It should be understood that batteries also contain a number of other essential components of batteries, and that assembly methods of batteries are known in the art.

In some embodiments, the battery may be a button battery. The assembly of button batteries may be known in the art. For example, the positive electrode sheet can be placed in a glove box for button battery assembly.

In order to better understand the above exemplary embodiments of the present disclosure, they are further illustrated in conjunction with specific examples.

### Example 1

The treatment of positive electrode material of a battery includes the following steps:
Step 1: Preparation of vanadium phosphate sodium positive electrode material: Using a traditional coating process to coat vanadium phosphate sodium on aluminum foil, and cutting the coated aluminum foil to obtain vanadium phosphate sodium positive electrode material with a thickness of 80 µm.
Step 2: Activation treatment using Nitrogen DBD cold plasma: First, activation treating a side of the positive electrode material vanadium phosphate sodium in step (1) coated with vanadium phosphate sodium for 1min under the cold plasma of nitrogen DBD, the gas flow rate is 10ml/s, the working current is 1 A, and the voltage is 150 V. Then, the positive electrode material of vanadium phosphate sodium after the activation treating is cooled to room temperature to obtain activation treated positive electrode material vanadium phosphate sodium.
Step 3: Assembling of Button battery: Placing the activation treated positive electrode material vanadium phosphate sodium in step (2) into a glove box to assemble the button battery, and then testing the battery after standing for 12 h.

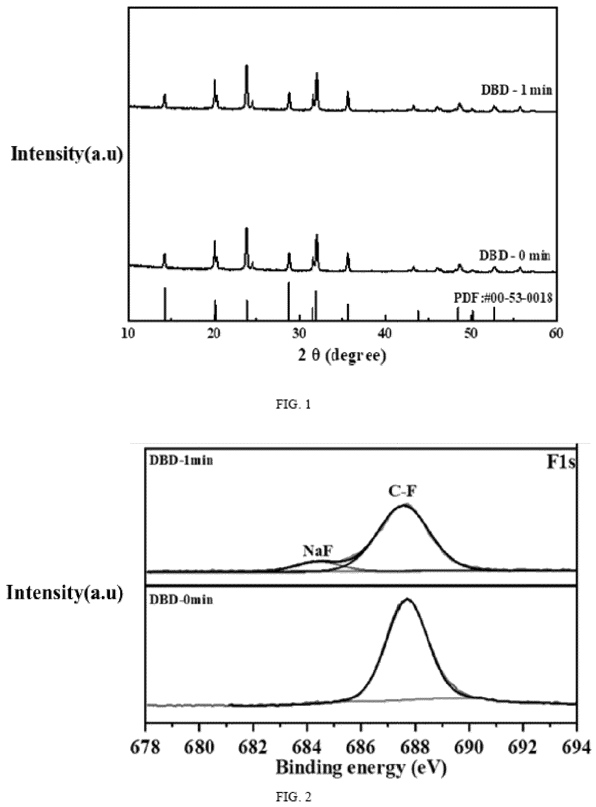

Physical characterization of vanadium phosphate sodium positive electrode material obtained after nitrogen DBD activation treatment by cold plasma was conducted. It can be seen from the XRD pattern of vanadium phosphate sodium positive electrode material in FIG. 1 that the physical properties of vanadium phosphate sodium positive electrode material after nitrogen DBD cold plasma activation treatment (DBD-1 min in FIG. 1) did not change compared with that untreated (DBD-0 min in FIG. 1), indicating that nitrogen DBD cold plasma treatment would not damage the crystal structure of vanadium phosphate sodium. Moreover, it can be seen from the XPS diagram of the positive electrode material of vanadium phosphate sodium in FIG. 2 that, compared with the electrode material without nitrogen DBD-0 min, NaF layer will be generated after nitrogen DBD-1 min treatment.

### Example 2

The treatment of battery positive electrode material includes the following steps:
Step 1: Preparation of vanadium phosphate sodium positive electrode material: Using the traditional coating process to coat vanadium phosphate sodium on aluminum foil, and cutting the coated aluminum foil to obtain vanadium phosphate sodium positive electrode material with a thickness of 80µm.
Step 2: Activation treatment using Nitrogen DBD cold plasma: First, activation treating a side of the positive electrode material vanadium phosphate sodium in step (1) coated with vanadium phosphate sodium for 2 min under the cold plasma of nitrogen DBD, the gas flow rate is 10 ml/s, the working current is 1 A, and the voltage is 150 V. Then, the positive electrode material of vanadium phosphate sodium after the activation treating is cooled to room temperature to obtain activation treated positive electrode material vanadium phosphate sodium.
Step 3: Assembling of button battery: Placing the activation treated positive electrode material vanadium phosphate sodium described in step (2) into the glove box to assemble the button battery, and then carry out battery test after standing for 12 h.

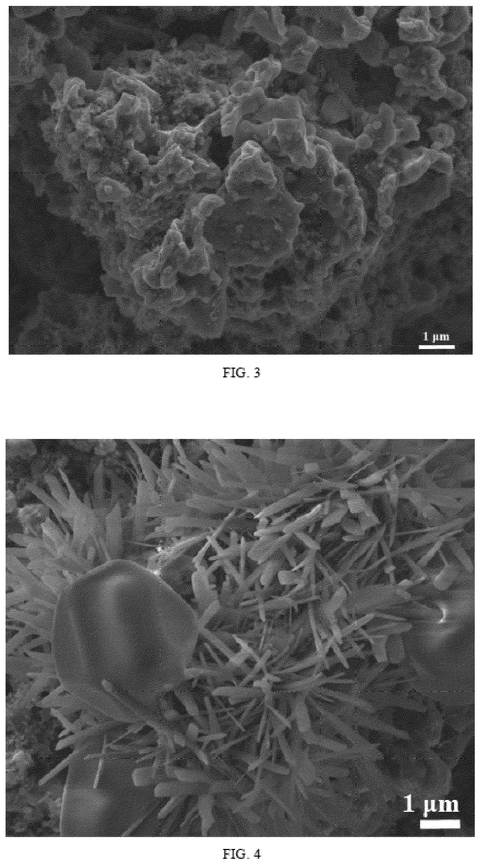

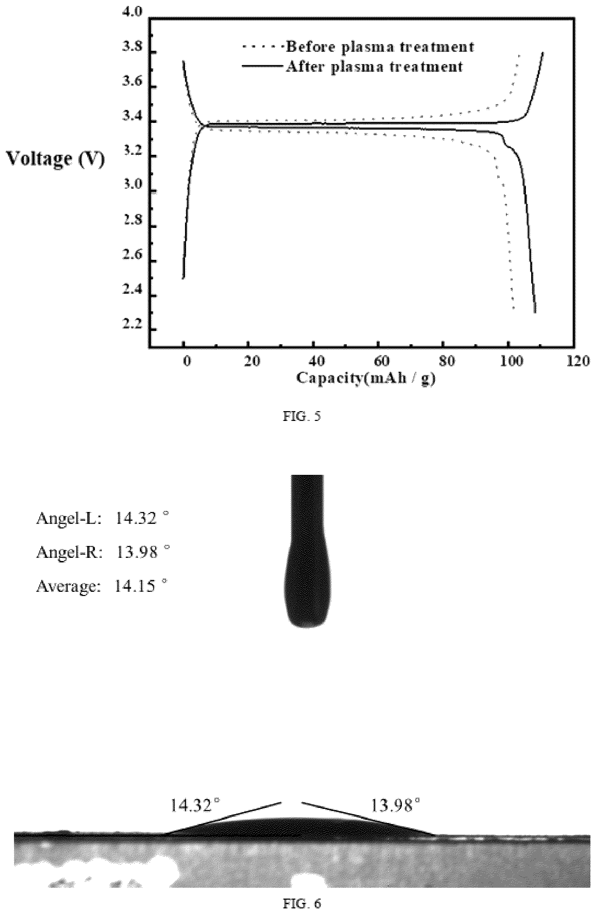

The morphology and physical and electrochemical tests of the positive electrode material vanadium phosphate sodium obtained through activation treatment by the nitrogen DBD cold plasma were carried out. The content of nitrogen doping in the carbon layer was 159 ppm. According to the SEM images in FIG. 3 and FIG. 4, compared with the vanadium phosphate sodium positive electrode material without nitrogen DBD cold plasma treatment (FIG. 2), the treated vanadium phosphate sodium positive electrode material (FIG. 3) has a rod-like shape (rod-like structure, slender structure), which can improve interface contact between vanadium phosphate sodium positive electrode material and electrolyte. As shown in the volt-capacity diagram in FIG. 5, the polarization of the battery drops from 0.04 V to less than 0.03 V, and the charge-discharge platform is more stable and has a higher specific capacity.

### Example 3

The treatment of battery positive electrode material includes the following steps:
Step 1: Preparation of vanadium phosphate sodium positive electrode material: Using the traditional coating process to coat vanadium phosphate sodium on aluminum foil, and cutting the coated aluminum foil to obtain vanadium phosphate sodium positive electrode material with a thickness of 80 µm.
Step 2: activation treatment using Nitrogen DBD cold plasma: First, activation treating a side of the positive electrode material of sodium phosphate vanadium in step (1) coated with sodium phosphate vanadium for 3 min under the cold plasma of nitrogen DBD, the gas flow rate is 10 ml/s, the working current is 1 A, and the voltage is 150 V. Then, the activated positive electrode material vanadium phosphate sodium after the activation treating is cooled to room temperature to obtain activation treated positive electrode material vanadium phosphate sodium.
Step 3: Assembling of button battery: Placing the activation treated vanadium phosphate sodium positive electrode material into the glove box for to assemble the button battery, and carrying out battery test after standing for 12 h.

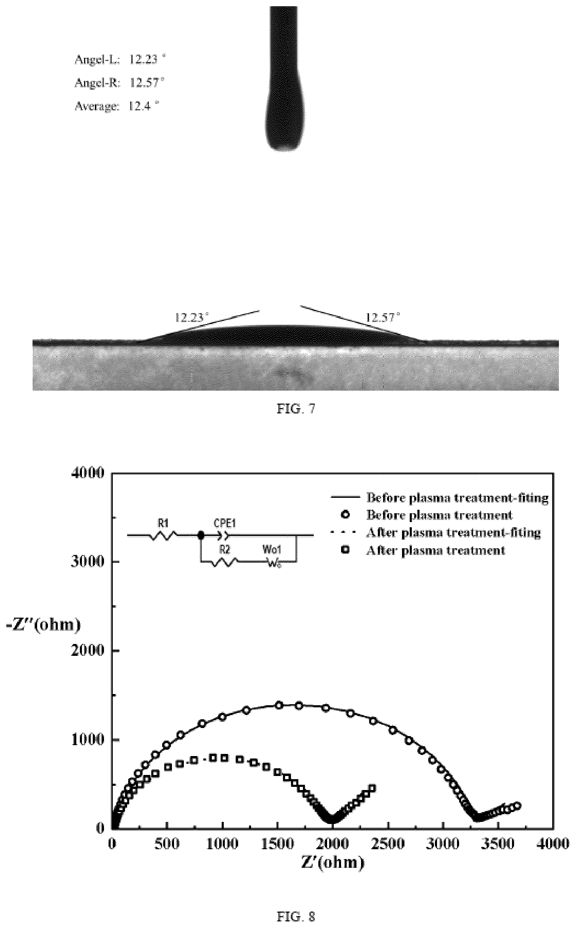

Physical and electrochemical tests were conducted on the positive electrode material vanadium phosphate sodium obtained after the cold plasma activation treatment by nitrogen DBD. The content of nitrogen doping in the carbon layer was 87 ppm. The contact Angle of untreated vanadium phosphate sodium positive electrode material to the electrolyte was shown in FIG. 6, and the contact Angle of the treated Vanadium phosphate sodium positive electrode material to the electrolyte was shown in FIG. 7. The contact Angle of the positive electrode material to the electrolyte decreases from 14.15° to 12.4°, which proves that the positive electrode material has better wettability to the electrolyte after treatment. At the same time, the EIS in FIG. 8 showed a decrease in interface impedance from 3200 Ω to 2500 Ω compared with untreated.

### Example 4

The treatment of battery positive electrode material includes the following steps:
Step 1: Preparation of vanadium phosphate sodium positive electrode material: Using the traditional coating process to coat vanadium phosphate sodium on aluminum foil, and cutting the coated aluminum foil to obtain vanadium phosphate sodium positive electrode material with a thickness of 80µm.
Step 2: Activation treatment using Nitrogen DBD cold plasma: First, activation treating a side of the positive electrode material of vanadium phosphate sodium in step (1) coated with vanadium phosphate sodium for 6 min under the cold plasma of nitrogen DBD, the gas flow rate is 10 ml/s, the working current is 1A, and the voltage is 150V. Then, the positive electrode material of vanadium phosphate sodium after the activation treating is cooled to room temperature to obtain activation treated positive electrode material vanadium phosphate sodium.
Step 3: Assembling of button battery: Placing the activation treated positive electrode material vanadium phosphate sodium described in step (2) into the glove box to assemble the button battery, and then carrying out battery test after standing for 12 h.

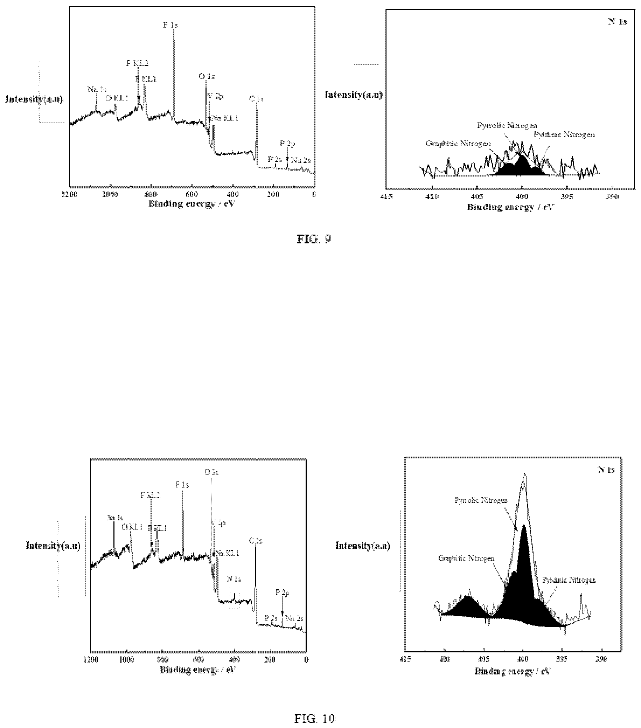

Physical and electrochemical tests were conducted on the vanadium phosphate sodium positive electrode material obtained through the cold plasma activation treatment of nitrogen DBD. The content of nitrogen doping in the carbon layer was 308ppm. The XPS of the untreated vanadium phosphate sodium positive electrode material was shown in FIG. 9, and the XPS of the treated vanadium phosphate sodium positive electrode material was shown in FIG. 10. Among them, the content of pyridine nitrogen, pyrrole nitrogen and graphitized nitrogen increases (here, pyridine nitrogen, pyrrole nitrogen and graphitized nitrogen are three different forms of existence in which nitrogen particles are doped into the carbon layer), thus increasing the defects of the carbon layer, which helps to improve the electronic and ionic conductivity of vanadium phosphate sodium.

### Example 5

The treatment of battery positive electrode material includes the following steps:
Step 1: Preparation of vanadium phosphate sodium positive electrode material: Using the traditional coating process to coat vanadium phosphate sodium on aluminum foil, and cutting the coated aluminum foil to obtain vanadium phosphate sodium positive electrode material with a thickness of 80 µm.
Step 2: activation treatment using Oxygen RF cold plasma: First, activation treating a side of the positive electrode material of vanadium phosphate sodium in step (1) coated with vanadium phosphate sodium for 6 min under the cold plasma of oxygen RF, the gas flow rate is 10ml/s, the working current is 1 A, and the voltage is 100 V. Then, the activated positive electrode material of vanadium phosphate sodium is cooled to room temperature to obtain activation treated positive electrode material vanadium phosphate sodium.
Step 3: Assembling of button battery: Placing the activation treated positive electrode material vanadium phosphate sodium described in step (2) into the glove box to assemble the button battery, and then carrying out battery test after standing for 12 h.

Physical and electrochemical tests were conducted on the positive electrode material of vanadium phosphate sodium which was activation treated by oxygen RF cold plasma. The content of argon doping in the carbon layer was 287 ppm. Compared with the untreated electrode sheet, the polarization and impedance are lower, the polarization is reduced by 43 % and the impedance is reduced by 18 %.

### Example 6

The treatment of battery positive electrode material includes the following steps:
Step 1: Preparation of vanadium phosphate sodium positive electrode material: Using the traditional coating process to coat vanadium phosphate sodium on aluminum foil, and cutting the coated aluminum foil to obtain vanadium phosphate sodium positive electrode material with a thickness of 80 µm.
Step 2: Activation treatment using Nitrogen-oxygen mixture CD cold plasma: First, activation treating a side of the positive electrode material of vanadium phosphate sodium in step 1 coated with vanadium phosphate sodium for 4 min under the cold plasma of CD of a mixture of nitrogen and oxygen. The gas flow rate is 10 ml/s, the working current is 2 A, and the voltage is 100 V. Then the positive electrode material of vanadium phosphate sodium after the activation treating is cooled to room temperature to obtain activation treated positive electrode material vanadium phosphate sodium.
Step 3: Assembling of Button battery: Placing the activation treated positive electrode material vanadium phosphate sodium described in step (2) into the glove box to assemble the button battery. All batteries need to stand for 12 hours before testing.

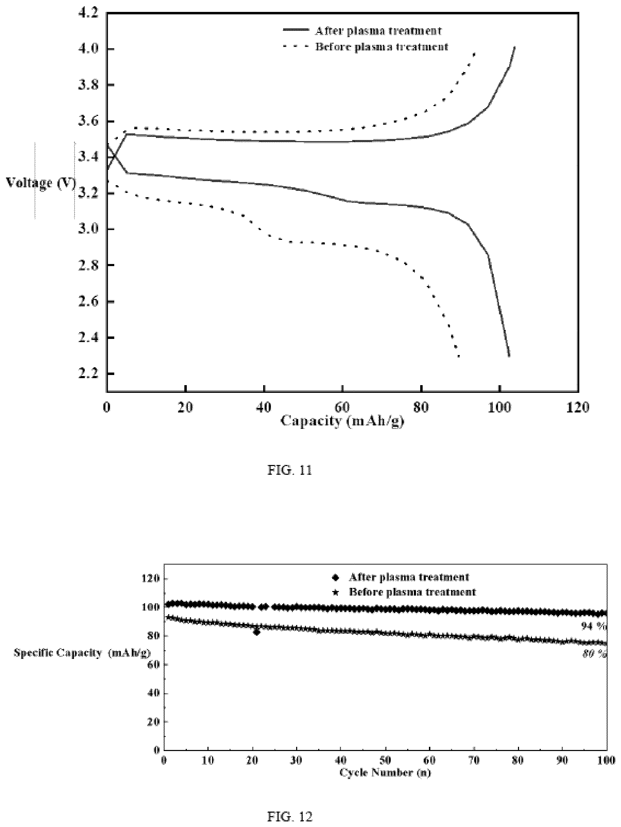

Physical and electrochemical tests were carried out on the positive electrode material of vanadium phosphate sodium which was activation treated by cold plasma of CD with the mixture of nitrogen and oxygen. The content of nitrogen and oxygen doping in the carbon layer is 378 ppm, which has lower polarization and impedance compared with the untreated electrode sheet. The voltage capacity of vanadium phosphate sodium under 5 C condition is shown in FIG. 11. After the treatment, the capacity of the battery is increased by 13.6 % on the basis of the original (before activation treating), and the polarization of the battery is reduced by about 45 %. The long cycle figure of vanadium phosphate sodium under 5 C condition is shown in FIG. 12. After treatment, the capacity retention rate of the battery is increased by 14 % on the basis of the original.

### Example 7

The treatment of battery positive electrode material includes the following steps:
Step 1: Preparation of vanadium phosphate sodium positive electrode material: Using the traditional coating process to have vanadium phosphate sodium coated on aluminum foil, and cutting the coated aluminum foil to obtain vanadium phosphate sodium positive electrode material with a thickness of 80 µm.
Step 2: Activation treatment using Oxygen CD cold plasma: First, activation treating a side of the positive electrode material vanadium phosphate sodium in step (1) coated with vanadium phosphate sodium for 4 min under the cold plasma of oxygen CD, the gas flow rate is 10 ml/s, the working current is 2 A, and the voltage is 100 V. Then, the positive electrode material vanadium phosphate sodium is cooled to room temperature to obtain activation treated positive electrode material vanadium phosphate sodium.
Step 3: Assembling of Button battery: Placing the activation treated position electrode material vanadium phosphate sodium described in step (2) into the glove box to assemble the button battery. All batteries need to stand for 12 hours before testing.

Physical and electrochemical tests were carried out on the positive electrode material vanadium phosphate sodium which was activated by cold plasma of oxygen CD. The content of oxygen doping in the carbon layer is 587 ppm, which has lower polarization and impedance compared with the untreated electrode sheet. The polarization is reduced by 45 0 %, and the impedance is reduced by 20 %.

### Example 8

Method for treating positive electrode material include the following steps:
Step 1: Preparation of lithium iron phosphate positive electrode material: Using traditional coating process to coat lithium iron phosphate on aluminum foil, and cutting the coated aluminum foil to obtain a thickness of 80µm lithium iron phosphate positive electrode material.
Step 2: Activation treatment using Nitrogen DBD cold plasma: Firstly, activation treating a side of the positive electrode material lithium iron phosphate in step (1) coated with lithium iron phosphate for 4 min under the cold plasma of nitrogen DBD, the gas flow rate is 10 ml/s, the working current is 4 A, and the voltage is 100 V. Then, the positive electrode material of lithium iron phosphate after activation treating is cooled to room temperature to obtain activation treated positive electrode material lithium iron phosphate.
Step 3: Assembling of Button battery: Placing the activation treated lithium iron phosphate positive electrode material described in step (2) into the glove box to assemble the button battery. All batteries need to stand for 12 hours before testing.

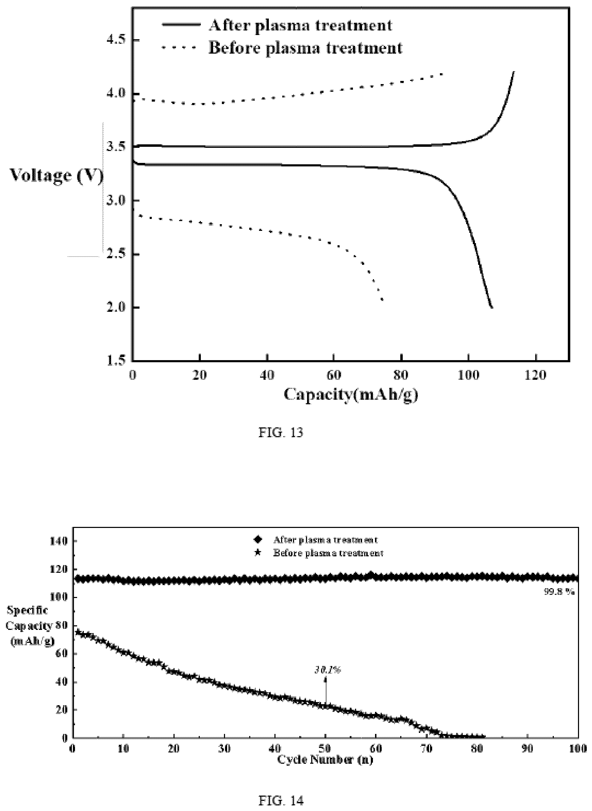

Physical and electrochemical tests on the positive electrode material of lithium iron phosphate obtained from the cold plasma activation treatment of nitrogen DBD show that the content of nitrogen doping in the carbon layer is 600 ppm, which has lower polarization, higher capacity and higher capacity retention rate than that of the untreated electrode sheet. The voltage capacity of the treated lithium iron phosphate under 5 C condition is shown in FIG. 13. After the treatment, the polarization of the battery is reduced by about 86 %, and the capacity is increased by 42.7 % on the basis of the original. The long cycle FIG of treated lithium iron phosphate under 5 C condition is shown in FIG. 14, and the capacity retention rate is increased by 69.7 % on the basis of the original.

### Example 9

The treatment of lithium iron phosphate positive electrode material includes the following steps:
Step 1: Preparation of lithium iron phosphate positive electrode material: Using traditional coating process to coat lithium iron phosphate on aluminum foil, and cutting the coated aluminum foil to obtain a thickness of 80 µm lithium iron phosphate positive electrode material.
Step 2: Nitrogen DBD cold plasma activation treatment: Firstly, activation treating a side of the positive electrode material lithium iron phosphate in step (1) coated with lithium iron phosphate for 10 min under the cold plasma of nitrogen DBD, the gas flow rate is 10 ml/s, the working current is 4 A, and the voltage is 100 V. Then, the positive electrode material lithium iron phosphate after activation treating is cooled to room temperature to obtain activation treated positive electrode material lithium iron phosphate.
Step 3: Assembling of Button battery: Placing the activation treated lithium iron phosphate positive electrode material described in step (2) into the glove box to assemble the button battery. All batteries need to stand for 12 hours before testing.

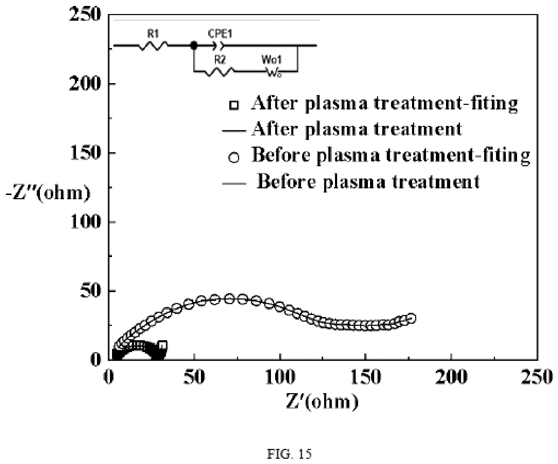

Physical and electrochemical tests were conducted on the positive electrode material of lithium iron phosphate obtained from the cold plasma activation of nitrogen DBD. The content of nitrogen doping in the carbon layer is 700 ppm, which has a lower impedance than that of the untreated electrode sheet. The EIS of lithium iron phosphate before and after treatment is shown in FIG. 15. After treatment, the battery impedance decreases from 126.3 Ω to 27.2 Ω.

## Claims

1. A method for treating positive electrode material of a battery, comprising:
activation treating the positive electrode material, wherein at least part of a surface of the positive electrode material is coated with a carbon layer, and the activation treating is performed under cold plasma to carry out active particle doping on the carbon layer, wherein an active particle doped amount is not less than 50ppm; wherein a power for the activation treatment is 100 W~500 W; a voltage for the activation treatment is 50 V~150 V, and a current for the activation treatment is 0.4 A~2 A; the active particle doped is one or combination of oxygen doped and nitrogen doped; and the activation treating comprising inputting a precursor gas comprising one or a combination of oxygen and nitrogen into a cold plasma generator to generate active particles to be doped in the carbon layer, where a flow rate of precursor gas is 1 ml/s~15 ml/s.

2. The method of Claim 1, wherein an activation treatment time is 1 min~60 min.

3. The method of Claim 1 or 2, wherein a discharge of the cold plasma is selected from one or combination of radio-frequency plasma discharge, corona discharge, dielectric barrier discharge and sliding arc discharge.

4. The method of Claim 1 or 2, wherein the positive electrode material of the battery is polyanionic compound, layered oxide, spinel compound, Prussian blue or positive electrode material of a ternary lithium battery.

5. The method of Claim 4, wherein the positive electrode material of the battery is vanadium phosphate sodium, lithium iron phosphate, sodium titanium phosphate, sodium fluoride phosphate, LiMO2, NaMO2, LiN2O4, lithium nickel-cobalt-manganate or lithium nickel-cobalt-aluminate, where M is Co, Ni, Mn, V or Fe. N is Co, Nix, Mn, or V.

6. The method of Claim 1, 2 or 4, wherein at least part of a surface of activation treated positive electrode material having a rod-like shape.

7. The method of Claim 6, wherein an average length of the rod-like shape is 1.5 µm~3 µm and an average diameter is 150 nm~300 nm.

8. Positive electrode material of a battery, wherein at least part of a surface of the positive electrode material contains a carbon layer and at least part of the surface has a rod-like shape and forms a NaF layer, wherein the carbon layer is a carbon layer doped with active particles after cold plasma treatment, and doped amount is not less than 50 ppm; wherein the active particles are one or a combination of oxygen and nitrogen.

9. The positive electrode material of a battery of Claim 8, wherein an average length of the rod-like shape is 1.5µm~3µm and an average diameter is 150 nm~300 nm.

10. The positive electrode material of a battery of Claim 8, wherein an average thickness of the NaF layer is 6nm~10nm and a content of NaF is not less than 500 ppm.

## Patentansprüche

1. Ein Verfahren zur Behandlung eines positiven Batterieelektrodenmaterials, umfassend:
eine Aktivierungsbehandlung des positiven Batterieelektrodenmaterials, wobei mindestens ein Teil einer Oberfläche des positiven Batterieelektrodenmaterials mit einer Kohlenstoffschicht beschichtet ist, und die Aktivierungsbehandlung unter kaltem Plasma durchgeführt wird, um ein Dotieren der Kohlenstoffschicht mit aktiven Partikeln durchzuführen, wobei eine Dotiermenge der aktiven Partikel nicht weniger als 50 ppm beträgt; wobei eine Leistung für die Aktivierungsbehandlung 100 W bis 500 W beträgt; eine Spannung für die Aktivierungsbehandlung 50 V bis 150 V beträgt und ein Strom für die Aktivierungsbehandlung 0.4 A bis 2 A beträgt; wobei die dotierten aktiven Partikel Sauerstoff, Stickstoff oder eine Kombination daraus umfassen; und wobei die Aktivierungsbehandlung das Einleiten eines Prekursorgases, das Sauerstoff, Stickstoff oder eine Kombination daraus umfasst, in einen Kaltplasmagenerator zum Erzeugen aktiver Partikel zur Dotierung der Kohlenstoffschicht umfasst, wobei eine Durchflussrate des Prekursorgases 1 ml/s bis 15 ml/s beträgt.

2. Das Verfahren nach Anspruch 1, wobei eine Dauer der Aktivierungsbehandlung 1 Minute bis 60 Minuten beträgt.

3. Das Verfahren nach Anspruch 1 oder 2, wobei eine Entladung des kalten Plasmas ausgewählt ist aus einer Hochfrequenzplasmentladung, einer Koronaentladung, einer dielektrischen Barrierenentladung und einer Gleitbogenenladung oder einer Kombination davon.

4. Das Verfahren nach Anspruch 1 oder 2, wobei das positive Batterieelektrodenmaterial ein polyanionischer Verbund, ein geschichtetes Oxid, ein Spinellverbund, Berliner Blau oder ein positives Elektrodenmaterial einer ternären Lithiumbatterie ist.

5. Das Verfahren nach Anspruch 4, wobei das positive Batterieelektrodenmaterial Natriumvanadiumphosphat, Lithiumeisenphosphat, Natriumtitanphosphat, Natriumfluorphosphat, LiMO₂, NaMO₂, LiN₂O₄, Lithium-Nickel-Kobalt-Manganat oder Lithium-Nickel-Kobalt-Aluminat ist, wobei M Co, Ni, Mn, V oder Fe ist und N Co, Nix, Mn oder V ist.

6. Das Verfahren nach Anspruch 1, 2 oder 4, wobei mindestens ein Teil einer Oberfläche des aktivierungsbehandelten positiven Batterieelektrodenmaterials eine stabförmige Struktur aufweist.

7. Das Verfahren nach Anspruch 6, wobei eine mittlere Länge der stabförmigen Struktur 1.5 µm bis 3 µm beträgt und ein mittlerer Durchmesser 150 nm bis 300 nm beträgt.

8. Positives Batterieelektrodenmaterial, wobei mindestens ein Teil einer Oberfläche des positiven Batterieelektrodenmaterials eine Kohlenstoffschicht enthält und mindestens ein Teil der Oberfläche eine stabförmige Struktur aufweist und eine NaF-Schicht bildet, wobei die Kohlenstoffschicht eine nach einer Behandlung mit kaltem Plasma mit aktiven Partikeln dotierte Kohlenstoffschicht ist und die Dotiermenge nicht weniger als 50 ppm beträgt; wobei die aktiven Partikeln Sauerstoff, Stickstoff oder eine Kombination daraus umfassen.

9. Das positive Batterieelektrodenmaterial nach Anspruch 8, wobei eine mittlere Länge der stabförmigen Struktur 1.5 µm bis 3 µm beträgt und ein mittlerer Durchmesser 150 nm bis 300 nm beträgt.

10. Das positive Batterieelektrodenmaterial nach Anspruch 8, wobei eine mittlere Dicke der NaF-Schicht 6 nm bis 10 nm beträgt und der Gehalt an NaF nicht weniger als 500 ppm beträgt.

## Revendications

1. Un procédé de traitement d'un matériau d'électrode positive de batterie, comprenant:
un traitement d'activation du matériau d'électrode positive, dans lequel au moins une partie de la surface du matériau d'électrode positive est revêtue d'une couche de carbone, et le traitement d'activation est réalisé par plasma froid afin de procéder à un dopage en particules actives de la couche de carbone, une quantité de particules actives dopées étant d'au moins 50 ppm; ledit traitement d'activation étant effectué avec une puissance de 100 W à 500 W; une tension de 50 V à 150 V, et un courant de 0.4 A à 2 A; les particules actives dopées étant de l'oxygène, de l'azote ou une combinaison des deux; et le traitement d'activation comprenant l'introduction d'un gaz précurseur comprenant de l'oxygène, de l'azote ou une combinaison des deux dans un générateur de plasma froid afin de générer des particules actives destinées à être dopées dans la couche de carbone, un débit du gaz précurseur étant de 1 ml/s à 15 ml/s.

2. Le procédé selon la revendication 1, dans lequel la durée du traitement d'activation est de 1 minute à 60 minutes.

3. Le procédé selon la revendication 1 ou 2, dans lequel la décharge du plasma froid est choisie parmi une décharge plasma à radiofréquence, une décharge corona, une décharge à barrière diélectrique ou une décharge à arc glissant, ou une combinaison de celles-ci.

4. Le procédé selon la revendication 1 ou 2, dans lequel le matériau d'électrode positive de la batterie est un composé polyanionique, un oxyde en couches, un composé de type spinelle, un bleu de Prusse ou un matériau d'électrode positive d'une batterie lithium-ion ternaire.

5. Le procédé selon la revendication 4, dans lequel le matériau d'électrode positive de la batterie est du phosphate de vanadium sodique, du phosphate de fer lithié, du phosphate de titane sodique, du phosphate de fluorure sodique, du LiMO₂, du NaMO₂, du LiN₂O₄, du manganate de nickel-cobalt-lithium ou de l'aluminate de nickel-cobalt-lithium, M étant choisi parmi Co, Ni, Mn, V ou Fe, et N étant choisi parmi Co, Nix, Mn ou V.

6. Le procédé selon la revendication 1, 2 ou 4, dans lequel au moins une partie de la surface du matériau d'électrode positive traité par activation présente une forme en bâtonnet.

7. Le procédé selon la revendication 6, dans lequel la longueur moyenne de la forme en bâtonnet est comprise entre 1,5 µm et 3 µm, et le diamètre moyen est compris entre 150 nm et 300 nm.

8. Un matériau d'électrode positive de batterie, dans lequel au moins une partie de la surface du matériau d'électrode positive comprend une couche de carbone et au moins une partie de la surface présente une forme en bâtonnet et forme une couche de NaF, la couche de carbone étant une couche dopée en particules actives après un traitement par plasma froid, la quantité de dopage étant d'au moins 50 ppm; où les particules actives étant de l'oxygène, de l'azote ou une combinaison des deux.

9. Le matériau d'électrode positive de batterie selon la revendication 8, dans lequel la longueur moyenne de la forme en bâtonnet est comprise entre 1.5 µm et 3 µm, et le diamètre moyen est compris entre 150 nm et 300 nm.

10. Le matériau d'électrode positive de batterie selon la revendication 8, dans lequel l'épaisseur moyenne de la couche de NaF est comprise entre 6 nm et 10 nm, et la teneur en NaF est d'au moins 500 ppm.
